# EUROPEAN PATENT SPECIFICATION

(11) **EP 4 425 692 B1**
(45) Date of publication and mention of the grant of the patent: **08.07.2026**
(21) Application number: 23852963.0
(22) Date of filing: 09.08.2023
(51) Int. Cl.: H01M 50/103, H01M 10/04

(54) **PRISMATIC SECONDARY BATTERY WITH IMPROVED SAFETY**
PRISMATISCHE SEKUNDÄRBATTERIE MIT VERBESSERTER SICHERHEIT
BATTERIE SECONDAIRE PRISMATIQUE À SÉCURITÉ AMÉLIORÉE

(30) Priority: 11.08.2022 KR 20220100399
(43) Date of publication of application: 04.09.2024
(73) Proprietor: LG Energy Solution, Ltd., Seoul 07335 (KR)
(72) Inventor: PARK, Ji Min, Daejeon 34122 (KR); SUNG, Joo Hwan, Daejeon 34122 (KR); JUNG, Kyung Hwan, Daejeon 34122 (KR)
(74) Representative: Goddar, Heinz J.
(86) International application number: PCT/KR2023/011711
(87) International publication number: WO 2024/035092

(56) References cited:
- CN-A- 103 730 623
- JP-A- 2021 044 082
- KR-A- 20060 113 017
- KR-A- 20150 104 285
- KR-B1- 100 719 725
- US-A1- 2007 154 787
- US-A1- 2015 147 640
- US-A1- 2016 104 914
- US-A1- 2016 359 201

## Description

### CROSS-REFERENCE TO RELATED APPLICATIONS

This application is a National Phase entry of International Application No. PCT/KR2023/011711 filed on August 9, 2023, which claims priority to and the benefit of Korean Patent Application No. 10-2022-0100399, filed on August 11, 2022.

### TECHNICAL FIELD

The present disclosure relates to a prismatic secondary battery with improved safety by preventing internal fluctuations of an electrode assembly.

### BACKGROUND

Unlike primary batteries, secondary batteries can be recharged, and they have been heavily researched and developed in recent years due to their potential for miniaturization and large capacity. The demand for secondary batteries as an energy source is increasing rapidly due to the technological development and increasing demand for mobile devices, electric vehicles, and energy storage systems, which are emerging in response to the need for environmental protection.

Secondary batteries are categorized into coin-type cells, cylindrical cells, prismatic cells, and pouch-type cells based on the shape of the cell case. In a secondary battery, an electrode assembly mounted inside the battery case is a chargeable and dischargeable power generator consisting of a laminated structure of electrodes and separators.

Electrode assemblies can be roughly categorized into Jellyroll type, which is wound by interposing a separator between a positive electrode and negative electrode of an active material-coated sheet, Stack-type in which a plurality of positive electrodes and negative electrodes is sequentially stacked with a separator interposed therebetween, and Stack & Folding type in which stack-type unit cells are wound with a long separator film.

The positive and negative tabs of the electrode assembly housed in the prismatic secondary battery are bonded to the electrode leads and connected to the positive and negative terminals on the case, respectively. In the case accommodating the electrode assembly, some clearance is formed by the space for the electrical connection of the electrode assembly and the required amount of electrolyte. Therefore, the electrode assembly in the case is subjected to a fluctuation or slip phenomenon (slip phenomenon) due to external impact. In particular, prismatic secondary batteries used in hybrid vehicles and electric vehicles are subjected to frequent fluctuation phenomena due to impacts during driving.

The structural support of the electrode assembly is primarily provided by the positive and negative tabs (electrode tabs) connected to the positive and negative electrode terminals. Because of this, any fluctuation in the electrode assembly can cause stresses to be concentrated on the electrode tabs, which can lead to problems such as tab tears, shorts due to electrical contact, or the like. In addition, damage to the tabs can also cause a reduction in the capacity of the secondary battery or an imbalance between a plurality of batteries in a battery pack, which can lead to various reliability issues that ultimately reduce the life of the battery.

US 2015/147640 A1 discloses a seal tape for a secondary battery that is attached to the outer surface of an electrode assembly which is received in a battery case, and includes a first adhesive layer having an adhesive surface adhered to the outer surface of the electrode assembly, a second adhesive layer having an adhesive surface at a side opposite to the adhesive surface of the first adhesive layer so as to adhere to an inner surface of the battery case, and a protective layer formed on the second adhesive layer, wherein the protective layer is entirely or partially removed by reacting with an electrolyte of the secondary battery.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### SUMMARY

The purpose of the present disclosure is to improve the support structure of an electrode assembly stored inside a prismatic secondary battery, so that it can suppress fluctuations during use.

However, the technical problems that the present disclosure seeks to address are not limited to those described above, and other problems not mentioned will be apparent to those of ordinary skill in the art from the following description of the embodiments.

The present disclosure provides a prismatic secondary battery as set out in claim 1. Advantageous embodiments thereof are detailed in the dependent claims.

The swelling tape may elongate in a longitudinal direction or expand in volume by contacting with the electrolyte.

In addition, the swelling tape may be attached to front, rear, left, and right surfaces of the electrode assembly.

In an exemplary embodiment of the present disclosure, the swelling tape may be attached continuously along a perimeter comprising the front, rear, left, and right surfaces of the electrode assembly.

Alternatively, the swelling tape above may be attached along the perimeter of the front, rear, left, and right surfaces of the electrode assembly, and may form a first void part along an entire corner between the front, rear, left, and right surfaces of the electrode assembly.

Furthermore, the swelling tape may form a second void part in a middle part of the front and rear surfaces of the electrode assembly.

Here, the swelling tape attached to the front and rear surfaces of the electrode assembly by the second void part may be severed on both sides.

In addition, the swelling tape may form a third void part in a center part of the left and right surfaces of the electrode assembly.

The first beading part compresses a surface of the swelling tape attached to the electrode assembly stored inside the case.

The first beading part may be formed in a position spaced apart from an electrode tab of the electrode assembly stored within the case, and may be formed adjacent to the cap plate to compress an upper part of the electrode assembly stored within the case.

In addition, the first beading part may be formed continuously on all four surfaces along the front, rear, left, and right perimeters of the case.

In addition, a second beading part may be formed on at least two surfaces facing each other along the front, rear, left, and right perimeters of the case at a height adjacent to a lower surface of the case may be further included.

The second beading part may support a lower part of the electrode assembly stored within the case.

In an exemplary embodiment of the present disclosure, the second beading part may support by contacting a lower surface of the electrode assembly.

In the prismatic secondary battery of the present disclosure with the above configuration, a swelling tape that elongates or expands in contact with the electrolyte in the case is attached to the front, rear, left, and right surfaces of the electrode assembly, and the swelling tape in contact with the electrolyte fills the gap between the inner surface of the case and the electrode assembly, thereby suppressing the fluctuation of the electrode assembly in the front, rear, left, and right directions.

In addition, the prismatic secondary battery of the present disclosure has a concave beading part formed in the case to compress and fix the electrode assembly with a swelling tape, thereby improving the support structure of the electrode assembly.

Therefore, the prismatic secondary battery of the present disclosure prevents various problems such as shorts and tabs tearing due to electrical contact caused by fluctuations during use by suppressing fluctuations in the front, rear, left, and right directions of the electrode assembly and improving the overall support structure, thereby greatly improving the safety of the secondary battery.

However, the technical effects of the present disclosure are not limited to those described above, and other effects not mentioned will be apparent to one of ordinary skill in the art from the following description.

### BRIEF DESCRIPTION OF THE DRAWINGS

The following drawings accompanying this specification illustrate preferred exemplary embodiments and are intended to serve as a further understanding of the technical ideas of the present disclosure in conjunction with the detailed description that follows, so the present disclosure is not to be construed as limited to what is shown in such drawings.
FIG. 1 is an exploded perspective view of a prismatic secondary battery according to an exemplary embodiment of the present disclosure.
FIG. 2 is a perspective view illustrating an attachment structure of a swelling tape according to an exemplary embodiment of the present disclosure.
FIG. 3 is a perspective view illustrating an attachment structure of a swelling tape having a first void part.
FIG. 4 is a perspective view illustrating an attachment structure of a swelling tape having a second void part, respectively.
FIG. 5 is a perspective view illustrating an attachment structure of a swelling tape having a second void part, respectively.
FIG. 6 is a perspective view illustrating an attachment structure of a swelling tape having a third void part.
FIG. 7 is a cross-sectional view illustrating a structure in which the a beading part supports an electrode assembly.
FIG. 8 is a drawing illustrating relative positions of a first beading part and an electrode assembly.
FIG. 9 is a perspective view illustrating an embodiment provided with first and second beading parts.
FIG. 10 is a cross-sectional view illustrating a structure in which the first and second beading parts support an electrode assembly.

### DETAILED DESCRIPTION

The present disclosure may have various modifications and various examples, and specific examples are illustrated in the drawings and described in detail in the description.

However, it should be understood that the present disclosure is not limited to specific embodiments. The scope of the protection is defined by the appended claims.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

The present disclosure relates to a prismatic secondary battery, which in one example, the prismatic secondary battery includes a case including an opening, an electrode assembly stored inside the case, and a cap plate coupled to the opening in the case, and having electrode terminals of a positive electrode and a negative electrode.

Here, the prismatic secondary battery of the present disclosure has a swelling tape attached to the surface of the electrode assembly that elongates or expands in contact with the electrolyte in the case.

Here, the swelling tape may be elongated in the longitudinal direction in contact with the electrolyte, or may be volumetrically expanded in contact with the electrolyte.

And, a concave first beading part is formed on at least on two surfaces facing each other along the front, rear, left, and right perimeter of the case.

Here, a first beading part formed concave toward the interior of the case compresses a surface of the swelling tape attached to an electrode assembly stored inside the case.

In the prismatic secondary battery of the present disclosure with such a configuration, a swelling tape that elongates or expands in contact with the electrolyte in the case is attached to the front, rear, left, and right surfaces of the electrode assembly, and the swelling tape in contact with the electrolyte fills the gap between the inner surface of the case and the electrode assembly, thereby suppressing fluctuations in the front, rear, and left and right directions of the electrode assembly.

And, in the prismatic secondary battery of the present disclosure, a concave beading part formed on the case indirectly compresses the surface of the electrode assembly with a swelling tape to fix it, thereby improving the support structure of the electrode assembly and suppressing the slip phenomenon during use, thereby preventing various problems such as shorts and tearing of tabs due to electrical contact, which greatly improves the safety of the secondary battery.

Additionally, since the beading part is not directly compressing against the surface of the electrode assembly, any minor friction against the beading part is buffered by the swelling tape, greatly reducing the risk of damage to the electrode assembly.

Therefore, the prismatic secondary battery of the present disclosure prevents various problems such as shorts and tabs tearing due to electrical contact caused by fluctuations during use by suppressing fluctuations in the front, rear, left, and right directions of the electrode assembly and improving the support structure, thereby greatly improving the safety of the secondary battery.

Hereinafter, specific embodiments of the present disclosure will be described in detail with reference to the accompanying drawings. For reference, the directions of front, rear, up, down, left, and right used in the following description to designate relative positions are intended to aid in the understanding of the disclosure, and refer to the directions shown in the drawings unless otherwise specified.

### First embodiment

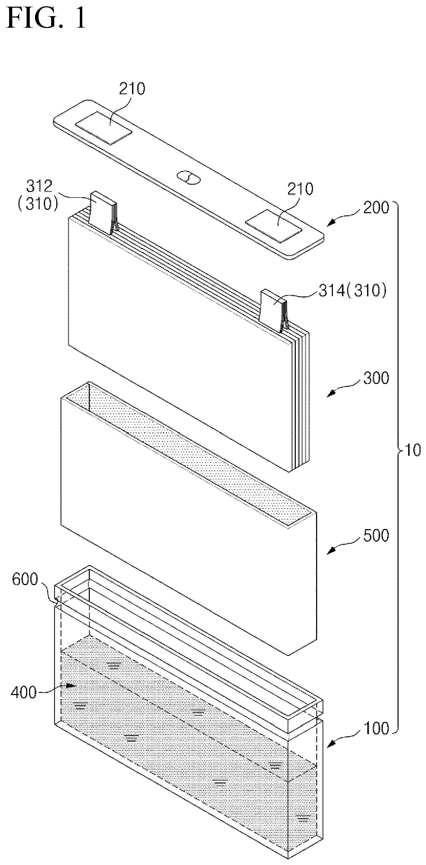

FIG. 1 is an exploded perspective view of a prismatic secondary battery 10 according to an exemplary embodiment of the present disclosure.

The prismatic secondary battery 10 shown includes a case 100 having at least one opening, and an electrode assembly 300 having a plurality of unit cells stacked thereon is stored within the case 100 through the opening of the case 100. Then, a cap plate 200 having positive and negative electrode terminals 210 is coupled to seal the opening of the case 100.

The prismatic secondary battery 10 of the first embodiment shown in FIG. 1 is a unidirectional secondary battery in which the electrode terminals 210 of the positive electrode and the negative electrode are disposed together on the upper surface of the case 100, and the cap plate 200 seals the upper surface of the case 100 as the upper surface of the case 100 includes an opening.

The electrode assembly 300 with the unit cells stacked is sealed and stored within the case 100. A unit cell is a cell with a unit structure of a negative electrode/separator/positive electrode, and a plurality of unit cells are stacked to form a single electrode assembly 300. A typical configuration of a unit cell is described below.

The positive electrode includes a positive electrode current collector and a positive electrode active material applied to one or both surfaces of the positive electrode current collector. At one end of the positive electrode current collector in the width direction, there is a non-coated part to which no positive electrode active material is applied. A positive electrode tab 312 is formed by performing a notching (punching) operation on the non-coated part.

The negative electrode includes a negative electrode current collector and a negative electrode active material applied to one or both surfaces of the negative electrode current collector. At one end of the negative electrode current collector in the width direction, there is a non-coated part to which no negative electrode active material is applied. Similarly, the non-coated part of the negative electrode functions as the negative electrode tab 314.

In the first embodiment, the electrode tabs 310, that is, the positive electrode tab 312 and the negative electrode tab 314, are located at the same end along the width direction of the electrode assembly 300, namely the height direction of the prismatic secondary battery 10. In the example shown, the positive electrode tab 312 and the negative electrode tab 314 extend toward the upper surface of the prismatic secondary battery 10, and the positive electrode tab 312 and the negative electrode tab 314 are electrically connected to the positive and negative terminals provided on the cap plate 200, respectively.

In the present disclosure, the positive electrode active material coated on the positive electrode current collector and the negative electrode active material coated on the negative electrode current collector can be any active material known in the art.

In one example, the positive electrode active material may include an alkali metal compound having the general formula A[AₓM_{y}]O_{2+z} (where A includes at least one element selected from Li, Na, and K; M includes at least one element selected from Ni, Co, Mn, Ca, Mg, Ti, Si, Fe, V, Zn, Cu, Al, Mo, Sc, Zr, Ru, and Cr; x ≥ 0, 1 ≤ x+y ≤2, 0.1 ≤ z ≤ 2; where stoichiometric coefficients of the components included in x, y, z, and M are selected such that the compound remains electrically neutral).

In another example, the positive electrode active material may be an alkali metal compound xLiM¹O₂-(1-x)Li₂M²O₃ (where M¹ includes at least one element having an average oxidation state of 3; M² includes at least one element having an average oxidation state of 4; 0≤ x ≤1) as disclosed in US6,677,082, US6,680,143, and others.

In another example, the positive electrode active material may be a lithium metal phosphate represented by the general chemical formula LiₐM¹ₓFe₁₋ₓM²_{y}P_{1-y}M³_{z}O_{4-z} (where M¹ includes at least one element selected from Ti, Si, Mn, Co, Fe, V, Cr, Mo, Ni, Nd, Mg, and Al; M² includes at least one element selected from Ti, Si, Mn, Co, Fe, V, Cr, Mo, Ni, Nd, Mg, Al, As, Sb, Si, Ge, V, and S; and M3 includes a halogenated element optionally including F; 0 < a ≤ 2, 0 ≤ x ≤ 1, 0 ≤ y < 1, 0 ≤ z < 1; and the stoichiometric coefficients of the components included in a, x, y, z, M¹, M², and M³ are selected such that the compound is electrically neutral), or a lithium metal phosphate represented by Li₃M₂(PO₄)₃ [where M includes at least one element selected from Ti, Si, Mn, Fe, Co, V, Cr, Mo, Ni, Mg, and Al].

Preferably, the positive electrode active material may include primary particles and/or secondary particles in which the primary particles are agglomerated.

In one example, the negative electrode active material can be a carbon material, lithium metal or lithium metal compound, silicon or silicon compound, tin or tin compound, or the like. Metal oxides such as TiO₂ and SnO₂ with a potential of less than 2V can also be used as negative electrode active materials. Both low and high crystalline carbon can be used as carbon materials.

In addition, the separator 320 interposed between the positive electrode 330 and the negative electrode 310 can be a porous polymeric film, for example, a porous polymeric film made from a polyolefin-based polymer, such as an ethylene homopolymer, a propylene homopolymer, an ethylene/butene copolymer, an ethylene/hexene copolymer, an ethylene/methacrylate copolymer, or the like, either alone or laminated therewith. As another example, the separator 320 may use a conventional porous nonwoven fabric, such as a nonwoven fabric made of high melting point glass fibers, polyethylene terephthalate fibers, or the like.

At least one surface of the separator can include a coating layer of inorganic particles. It is also possible that the separator itself is made of a coating layer of inorganic particles. The particles comprising the coating layer may have a structure combined with a binder such that an interstitial volume exists between adjacent particles.

The inorganic particles may include inorganic materials having a dielectric constant of 5 or greater. As a non-limiting example, the inorganic particles may include at least one material selected from the group consisting of Pb(Zr,Ti)O₃(PZT), Pb₁₋ₓLaₓZr_{1-y}Ti_{y}O₃(PLZT), PB(Mg₃Nb_{2/3})O₃-PbTiO₃(PMN-PT), BaTiO₃, hafnia (HfO₂), SrTiO₃, TiO₂, Al₂O₃, ZrO₂, SnO₂, CeO₂, MgO, CaO, ZnO, and Y₂O₃.

In addition, the electrolyte comprising the electrolyte 400 in which the electrode assembly 300 is impregnated may be a salt having a structure such as A⁺B⁻. Here, A⁺ includes ions consisting of alkali metal cations such as Li⁺, Na⁺, K⁺, or combinations thereof. And B⁻includes one or more anions selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The electrolyte can also be dissolved in organic solvents. As the organic solvent, propylene carbonate (PC), ethylenecarbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (γ-butyrolactone), or mixtures thereof may be used.

Returning to FIG. 1, the prismatic secondary battery 10 of the present disclosure includes a swelling tape 500 attached to a surface of the electrode assembly 300. The swelling tape 500 has the property of elongating or expanding in contact with the electrolyte 400 filled within the case 100. That is, the swelling tape 500 has the property of elongating in the longitudinal direction in contact with the electrolyte 400, or expanding in volume.

Some spare space exists between the electrode assembly 300 and the case 100 to allow for assembly of the electrode assembly 300, space for electrical connections, and the required amount of electrolyte 400, and the like. However, this spare space can cause the electrode assembly 300 within the case 100 to fluctuate or slide due to external impacts.

To solve these problems, the prismatic secondary battery 10 of the present disclosure has a swelling tape 500 attached to the surface of the electrode assembly 300. The swelling tape 500, which is an expandable material that reacts to the electrolyte 400, does not have a thickness sufficient to completely fill the gap between the electrode assembly 300 and the case 100 in its initial state without contact with the electrolyte 400. Accordingly, the assemblage of the electrode assembly 300 with the swelling tape 500 attached is well maintained when the electrode assembly 300 is stored in the case 100.

Then, when the electrode assembly 300 with the swelling tape 500 is finished being stored in the case 100, the electrolyte 400 comes into contact with the swelling tape 500, causing the swelling tape 500 to elongate or expand. When the swelling tape 500 expands and swells, it fills the gap between the electrode assembly 300 and the case 100, and even when it is elongated, it fills the gap by forming a curved three-dimensional shape due to the mutual balance of the force generated by the expansion of the base layer of the swelling tape 500 and the fixing force of the adhesive layer.

The base layer of the swelling tape 500, for example, is made of a material that elongates or expands in volume upon contact with a liquid, such as the electrolyte 400, and the shape of the base layer is not particularly limited. For example, it may be in the shape of a film or sheet.

The material of the base layer can be any material that has the property of expanding upon contact with the liquid. In one example, the base layer may be a polymeric film or sheet that has been manufactured to exhibit swelling properties upon contact with a fluid by stretching or shrinking during manufacturing.

In one example, as the base layer, a base layer including a urethane bond, an ester bond, or an ether bond, or a base layer including a cellulose ester compound may be used. Examples of such base layer include acrylate-based base layer, urethane-based base layer, epoxy-based base layer, or cellulose-based base layer.

When the swelling tape 500 having such an expansion characteristic is attached to the surface of the electrode assembly 300 via the adhesive layer and comes into contact with the electrolyte 400 filled in the case 100, it elongates or expands to fill the gap between the electrode assembly 300 and the case 100, thereby preventing the electrode assembly 300 from fluctuating. As the electrode assembly 300 is stably supported by the swelling tape 500, problems such as shorting of the electrode tabs 310 are eliminated, thereby improving the safety of the prismatic secondary battery 10.

Furthermore, the prismatic secondary battery 10 of the present disclosure has a concave first beading part 600 formed on at least two surfaces facing each other along the front, rear, left, and right perimeter of the case 100. The first beading part 600 forms a concave surface in the form of a thin line, and the concave surface of the first beading part 600 has a depth that compresses the electrode assembly 300 stored inside the case 100. More precisely, the concave surface of the first beading part 600 directly compresses the surface of the swelling tape 500 attached to the surface of the electrode assembly 300, thereby indirectly compressing the electrode assembly 300.

Because the first beading part 600 is in the form of a thin line, it has a very small impact on the capacity of the prismatic secondary battery 10, even though it forms a concave surface inwardly into the case 100. In other words, the first beading part 600 has a very limited impact on the capacity or size of the essential components of the prismatic secondary battery 10 that are stored inside the case 100, such as the electrode assembly 300 and/or the electrolyte 400.

As shown in FIG. 1, the first beading part 600 formed over at least two surfaces facing each other along the front, rear, and left periphery of the case 100 compresses in both directions facing the surface of the electrode assembly 300. In other words, the electrode assembly 300 having a gap with respect to the case 100 is pressed and fixed in both directions by the opposite first beading part 600, thereby improving the support structure of the electrode assembly 300 and suppressing a slip phenomenon during use. As a result, the fluidity of the electrode assembly 300 is more firmly restricted by both the swelling tape 500 and the first beading part 600, thereby preventing various problems such as shorting or tearing of the tabs due to electrical contact, thereby greatly improving the safety of the prismatic secondary battery 10.

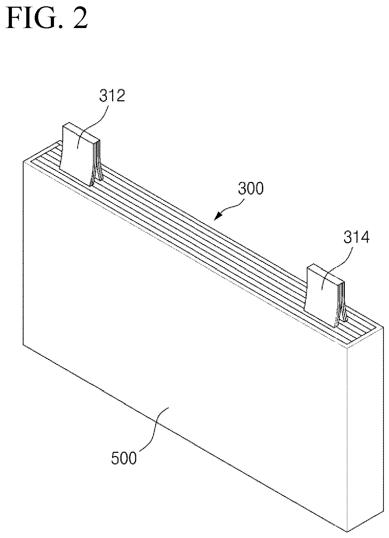

Meanwhile, the first embodiment of the present disclosure provides various embodiments of the attachment structure of the swelling tape 500. For example, as shown in FIG. 2, the swelling tape 500 may be attached in all directions on the front, rear, left, and right surfaces of the electrode assembly 300. By attaching the swelling tape 500 to the front, rear, left, and right of the electrode assembly 300, the occurrence of fluctuations in the front, rear, left, and right directions is suppressed.

In the illustrated embodiment, the swelling tape 500 is attached continuously around the perimeter of the front, rear, left, and right surfaces of the electrode assembly 300, which may be a particularly efficient attachment structure for automatic or semi-automatic attachment using a swelling tape 500 wound in a roll-type.

Furthermore, by having the width of the swelling tape 500 correspond to the width of the electrode assembly 300, the swelling tape 500 can be continuously attached across the entire front, rear, left, and right surfaces of the electrode assembly 300. Since the swelling tape 500 is insulating, the entire front, rear, left, and right surfaces of the electrode assembly 300 are protected by the swelling tape 500, which is further advantageous for preventing problems such as electrical shorts.

In addition, to further enhance the functionality of the swelling tape 500, the attachment structure of the swelling tape 500 may be provided with a number of void parts.

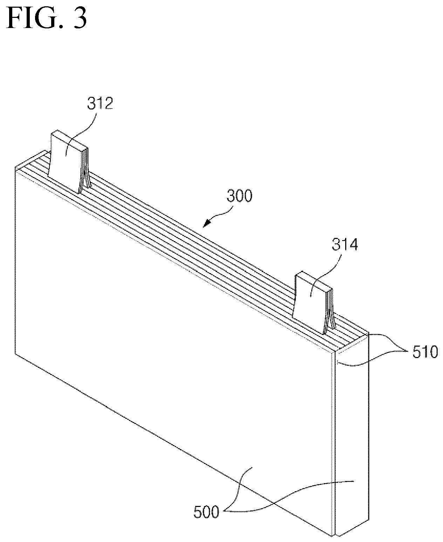

FIG. 3 is a perspective view illustrating an attachment structure for the swelling tape 500 having a first void part 510. Referring to FIG. 3, while the swelling tape 500 is attached along the perimeter of the front, rear, left, and right surfaces of the electrode assembly 300, the first void part 510 is formed along the entire corners between the front, rear, left, and right surfaces of the electrode assembly 300.

In other words, in the embodiment of FIG. 3, the swelling tape 500 attached to each of the front, rear, left, and right surfaces of the electrode assembly 300 is isolated from each other by the four front, rear, left, and right corners of the electrode assembly 300.

This is in consideration of the fact that if the swelling tape 500 is attached continuously around the perimeter of the front, rear, left, and right surfaces of the electrode assembly 300, as in the embodiment of FIG. 2, the swelling tape 500 is bent at the corners, which has the disadvantage of concentrating stresses in the areas where the swelling tape 500 is bent at right angles.

If stresses are concentrated in areas where the swelling tape 500 is bent, there is a concern that strong forces may act on the corners of the electrode assembly 300 upon expansion of the swelling tape 500, causing deformation of the electrode assembly 300. The embodiment of FIG. 3 addresses this problem of stress concentration by forming a first void part 510 along the entire corners between the front, rear, left, and right surfaces of the electrode assembly 300 with respect to the swelling tape 500.

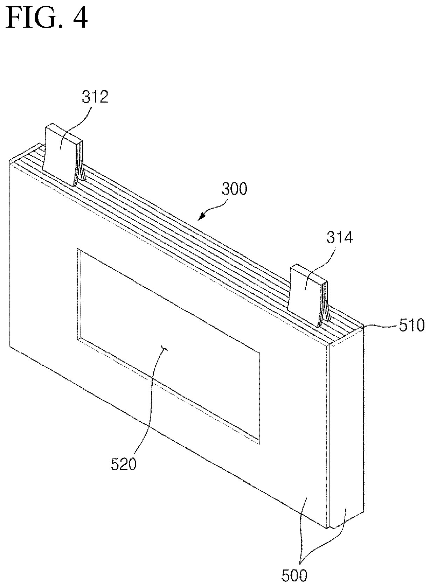

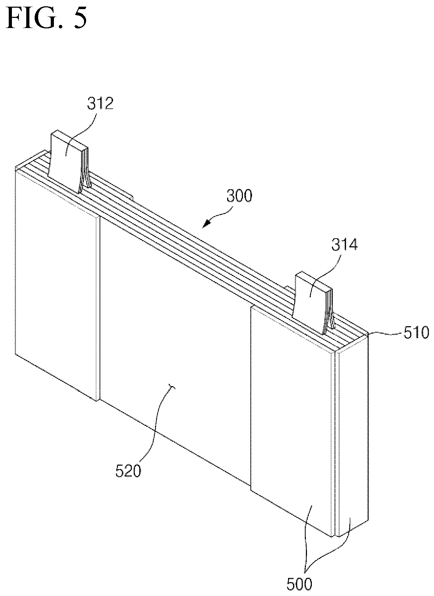

Furthermore, FIGS. 4 and 5 are perspective views illustrating an attachment structure for swelling tape 500 having a second void part 520, respectively. Note that while both FIGS. 4 and 5 are both shown with a first void part 510, the first void part 510 and the second void part 520 are independent configurations and do not necessarily need to be combined together.

The second void part 520 may be a void part formed in the center part of the front and rear surfaces of the electrode assembly 300, such that the second void part 520 forms a closed shape inside the swelling tape 500, as shown in FIG. 4, or the second void part 520 may be formed such that the swelling tape 500 attached to the front and rear surfaces of the electrode assembly 300 is severed by the second void part 520, as shown in FIG. 5.

The second void part 520 is intended to form a space for recovering a certain injection amount of the electrolyte 400, which is reduced by the volume occupied by the swelling tape 500, and is also intended to counteract the phenomenon of swelling of the center part of the electrode assembly 300 (swelling phenomenon) as the charge and discharge cycles are repeated.

Here, the front and rear surfaces of the electrode assembly 300 are referred to with reference to the drawings and are also meant to be the widest surfaces of the prismatic secondary battery 10 when viewed formally. In other words, it is intended that the second void part 520 be formed on the widest surface of the electrode assembly 300.

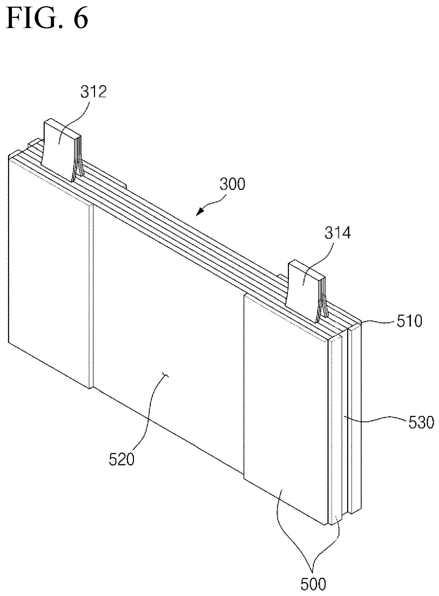

Furthermore, FIG. 6 illustrates an embodiment in which a third void part 530 is formed at a center part of the left and right surfaces of the electrode assembly 300. The third void part 530 is intended to supplement the second void part 520, and may be preferably provided together with the second void part 520.

### Second embodiment

A second embodiment of the present disclosure provides various embodiments of a beading part. In the second embodiment, the beading part includes a first beading part 600 and a second beading part 610.

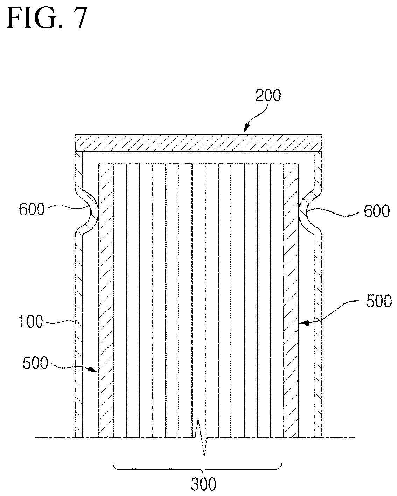

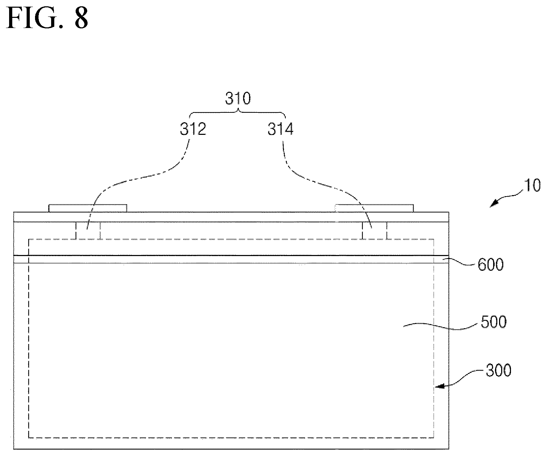

FIG. 7 is a cross-sectional view illustrating a structure in which the first beading part 600 supports the electrode assembly 300, and FIG. 8 is a view illustrating the relative position of the first beading part 600 and the electrode assembly 300.

As shown in FIG. 7, the first beading part 600 compresses a surface of the swelling tape 500 attached to the electrode assembly 300 stored inside the case 100. More specifically, the concave surface of the first beading part 600 directly compresses the surface of the swelling tape 500 attached to the surface of the electrode assembly 300, thereby indirectly compressing the electrode assembly 300. This significantly improves the support structure of the electrode assembly 300 inside the case 100, without fear of the electrode assembly 300 being damaged by the compression of the first beading part 600.

Then, FIG. 8 is a front view of the prismatic secondary battery 10, wherein the electrode assembly 300 stored within the case 100 is represented by a silver line. The first beading part 600 is formed at a position spaced apart from the electrode tabs 310 of the electrode assembly 300. This is to prevent the first beading part 600 from directly compressing the electrode tab 310 and creating stress in the electrode tab 310, and also to ensure that the first beading part 600 is positioned toward the swelling tape 500.

Additionally, the first beading part 600 may be formed adjacent to the cap plate 200 that forms the upper surface of the case 100 to compress the upper part of the electrode assembly 300 stored within the case 100.

In addition, the first beading part 600 may be formed on two surfaces having the longest length in the width direction among the front, rear, left, and right perimeters of the case 100, that is, the front and rear surfaces of the case 100 with reference to the drawings. This allows the first beading part 600 to be formed of sufficient length to rigidly support the electrode assembly 300. Alternatively, as illustrated in FIG. 1, the first beading part 600 may be formed continuously on all four surfaces along the front, rear, left, and right perimeter of the case 100, and may more firmly support the electrode assembly 300 by indirectly compressing the electrode assembly 300 from all sides.

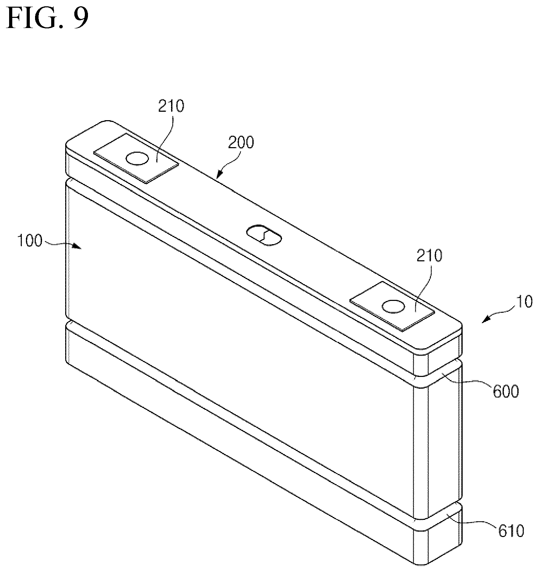

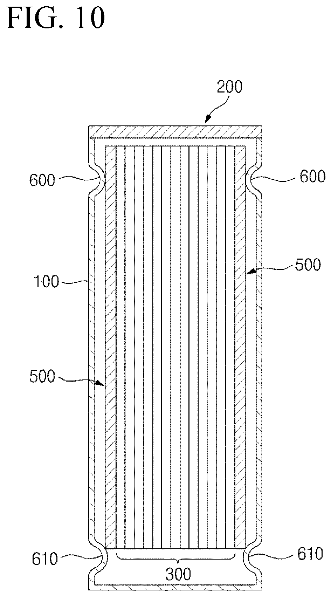

Meanwhile, FIG. 9 is a perspective view illustrating an embodiment having a first beading part 600 and a second beading part 610, and FIG. 10 is a cross-sectional view illustrating a structure in which the first beading part 600 and the second beading part 610 support the electrode assembly 300.

As shown in FIGS. 9 and 10, another example of the second embodiment further includes a second beading part 610 formed on at least two opposing surfaces along a front, rear, left, and right perimeter at a height adjacent to the lower surface of the case 100.

The second beading part 610 is a configuration that is added to assist the previously described first beading part 600 to further prevent the electrode assembly 300 from slipping. The first beading part 600 supports the upper part of the electrode assembly 300 through compression, while the second beading part 610 supports the lower part of the electrode assembly 300.

In the cross-sectional view of FIG. 10, the second beading part 610 contacts and supports the lower part of the electrode assembly 300 without compressing the surface of the electrode assembly 300 stored inside the case 100. In other words, the second beading part 610 does not directly compress the electrode assembly 300, but serves to support the lower surface of the electrode assembly 300 to prevent it from sliding downward.

In such an embodiment, the slip phenomenon of the electrode assembly 300 is completely eliminated because the first beading part 600 compresses and fixes the upper part of the electrode assembly 300 while the second beading part 610 supports the lower surface of the electrode assembly 300.

Here, by not forming the second beading part 610 into a structure that compresses the electrode assembly 300, unintended deformation of the electrode assembly 300 may occur during the insertion process so that both the upper and lower parts of the electrode assembly 300 are fixed. Furthermore, it is considered that a structure compressed by the second beading part 610 may act as a hindrance in accommodating the deformation of the electrode assembly 300 when a swelling phenomenon occurs in the electrode assembly 300 due to repeated charging and discharging of the prismatic secondary battery 10.

And, as in the case of the first beading part 600, the second beading part 610 may be formed on the front and rear surfaces of the case 100, where the length in the width direction is the longest among the front, rear, left, and right perimeters of the case 100, or may be formed continuously on all four surfaces along the front, rear, left, and right perimeters of the case 100. FIG. 9 illustrates an example in which the second beading part 610 is formed continuously across the four surfaces along the front, rear, left, and right perimeter of the case 100.

Various principles and features have been described above in more detail through the drawings and embodiments. However, the configurations described in the drawings or the embodiments in the specification are merely embodiments of the present disclosure and do not represent all the technical ideas therein. Thus, it is to be understood that there may be various equivalents and variations in place of them at the time of filing the present application.

### [Reference numerals]

10: PRISMATIC SECONDARY BATTERY
100: CASE
200: CAP PLATE
210: ELECTRODE TERMINAL
300: ELECTRODE ASSEMBLY
310: ELECTRODE TAB
312: POSITIVE ELECTRODE TAB
314: NEGATIVE ELECTRODE TAB
400: ELECTROLYTE
500: SWELLING TAPE
510: FIRST VOID PART
520: SECOND VOID PART
530: THIRD VOID PART
600: FIRST BEADING PART
610: SECOND BEADING PART

## Claims

1. A prismatic secondary battery (10) comprising:
a case (100) including an opening;
an electrode assembly (300) stored inside the case (100); and
a cap plate (200) coupled to the opening in the case (100), and having electrode terminals (210) of a positive electrode (330) and a negative electrode (310), wherein:
a swelling tape (500) is attached to a surface of the electrode assembly (300), wherein the swelling tape (500) elongates or expands in contact with an electrolyte (400) in the case (100), and
a concave first beading part (600) is formed on at least two surfaces facing each other along a front, rear, left and right perimeter of the case (100), **characterized in that**
the first beading part (600) compresses a surface of the swelling tape (500) attached to the electrode assembly (300) stored inside the case (100).

2. The prismatic secondary battery (10) of claim 1, wherein the swelling tape (500) stretches in a longitudinal direction or expands in volume by contacting with the electrolyte (400).

3. The prismatic secondary battery (10) of claim 1, wherein the swelling tape (500) is attached to front, rear, left, and right surfaces of the electrode assembly (300).

4. The prismatic secondary battery (10) of claim 3, wherein the swelling tape (500) is attached continuously along a perimeter comprising the front, rear, left, and right surfaces of the electrode assembly (300).

5. The prismatic secondary battery (10) of claim 3, wherein the swelling tape (500) is attached along the perimeter of the front, rear, left, and right surfaces of the electrode assembly (300), and forms a first void part (510) along an entire corner between the front, rear, left, and right surfaces of the electrode assembly (300).

6. The prismatic secondary battery (10) of claim 5, wherein the swelling tape (500) forms a second void part (520) in a middle part of the front and rear surfaces of the electrode assembly (300).

7. The prismatic secondary battery (10) of claim 6, wherein the swelling tape (500) attached to the front and rear surfaces of the electrode assembly (300) by the second void part (520) is severed on both sides.

8. The prismatic secondary battery (10) of claim 6, wherein the swelling tape (500) forms a third void part (530) in a center part of the left and right surfaces of the electrode assembly (300).

9. The prismatic secondary battery (10) of claim 1, wherein the first beading part (600) is formed in a position spaced apart from an electrode tab (310, 312, 314) of the electrode assembly (300) stored within the case (100), and is formed adjacent to the cap plate (200) to compress an upper part of the electrode assembly (300) stored within the case (100).

10. The prismatic secondary battery (10) of claim 1, wherein the first beading part (600) is formed continuously on all four surfaces along the front, rear, left, and right perimeters of the case (100).

11. The prismatic secondary battery (10) of claim 9, further comprising a second beading part (610) formed on at least two surfaces facing each other along the front, rear, left, and right perimeters of the case (100) at a height adjacent to a lower surface of the case (100).

12. The prismatic secondary battery (10) of claim 11, wherein the second beading part (610) supports a lower part of the electrode assembly (300) stored within the case (100).

13. The prismatic secondary battery (10) of claim 12, wherein the second beading part (610) supports by contacting a lower surface of the electrode assembly (300).

## Patentansprüche

1. Prismatische Sekundärbatterie (10), umfassend:
ein Gehäuse (100) mit einer Öffnung;
eine Elektrodenanordnung (300), die in dem Gehäuse (100) untergebracht ist; und
eine Deckelplatte (200), die mit der Öffnung in dem Gehäuse (100) gekoppelt ist und Elektrodenterminals (210) einer positiven Elektrode (330) und einer negativen Elektrode (310) aufweist, wobei:
ein Schwellband (500) an einer Oberfläche der Elektrodenanordnung (300) angebracht ist, wobei sich das Schwellband (500) in Kontakt mit einem Elektrolyten (400) in dem Gehäuse (100) verlängert oder ausdehnt, und
ein konkaver erster Wulstteil (600) auf mindestens zwei Oberflächen ausgebildet ist, die entlang eines vorderen, hinteren, linken und rechten Umfangs des Gehäuses (100) einander zugewandt sind,
**dadurch gekennzeichnet, dass**
der erste Wulstteil (600) eine Oberfläche des Schwellbands (500) komprimiert, das an der Elektrodenanordnung (300) angebracht ist, die in dem Gehäuse (100) untergebracht ist.

2. Prismatische Sekundärbatterie (10) nach Anspruch 1, wobei sich das Schwellband (500) durch Kontakt mit dem Elektrolyten (400) in einer Längsrichtung dehnt oder im Volumen ausdehnt.

3. Prismatische Sekundärbatterie (10) nach Anspruch 1, wobei das Schwellband (500) an einer vorderen, einer hinteren, einer linken und einer rechten Oberfläche der Elektrodenanordnung (300) angebracht ist.

4. Prismatische Sekundärbatterie (10) nach Anspruch 3, wobei das Schwellband (500) kontinuierlich entlang eines Umfangs angebracht ist, der die vordere, die hintere, die linke und die rechte Oberfläche der Elektrodenanordnung (300) umfasst.

5. Prismatische Sekundärbatterie (10) nach Anspruch 3, wobei das Schwellband (500) entlang des Umfangs der vorderen, der hinteren, der linken und der rechten Oberfläche der Elektrodenanordnung (300) angebracht ist und einen ersten Hohlraumteil (510) entlang einer gesamten Ecke zwischen der vorderen, der hinteren, der linken und der rechten Oberfläche der Elektrodenanordnung (300) bildet.

6. Prismatische Sekundärbatterie (10) nach Anspruch 5, wobei das Schwellband (500) einen zweiten Hohlraumteil (520) in einem Mittelteil der vorderen und der hinteren Oberfläche der Elektrodenanordnung (300) bildet.

7. Prismatische Sekundärbatterie (10) nach Anspruch 6, wobei das Schwellband (500), das über den zweiten Hohlraumteil (520) an der vorderen und der hinteren Oberfläche der Elektrodenanordnung (300) angebracht ist, auf beiden Seiten durchtrennt ist.

8. Prismatische Sekundärbatterie (10) nach Anspruch 6, wobei das Schwellband (500) einen dritten Hohlraumteil (530) in einem Mittelteil der linken und der rechten Oberfläche der Elektrodenanordnung (300) bildet.

9. Prismatische Sekundärbatterie (10) nach Anspruch 1, wobei der erste Wulstteil (600) in einer Position ausgebildet ist, die von einem Elektroden-Tab (310, 312, 314) der Elektrodenanordnung (300), die in dem Gehäuse (100) untergebracht ist, beabstandet ist, und benachbart zu der Deckelplatte (200) ausgebildet ist, um einen oberen Teil der Elektrodenanordnung (300), die in dem Gehäuse (100) untergebracht ist, zu komprimieren.

10. Prismatische Sekundärbatterie (10) nach Anspruch 1, wobei der erste Wulstteil (600) kontinuierlich auf allen vier Oberflächen entlang des vorderen, hinteren, linken und rechten Umfangs des Gehäuses (100) ausgebildet ist.

11. Prismatische Sekundärbatterie (10) nach Anspruch 9, ferner umfassend einen zweiten Wulstteil (610), der auf mindestens zwei Oberflächen ausgebildet ist, die entlang des vorderen, hinteren, linken und rechten Umfangs des Gehäuses (100) in einer Höhe benachbart zu einer unteren Oberfläche des Gehäuses (100) einander zugewandt sind.

12. Prismatische Sekundärbatterie (10) nach Anspruch 11, wobei der zweite Wulstteil (610) einen unteren Teil der Elektrodenanordnung (300), die in dem Gehäuse (100) untergebracht ist, stützt.

13. Prismatische Sekundärbatterie (10) nach Anspruch 12, wobei der zweite Wulstteil (610) durch Kontaktieren einer unteren Oberfläche der Elektrodenanordnung (300) stützt.

## Revendications

1. Batterie rechargeable prismatique (10), comprenant :
un boîtier (100) incluant une ouverture ;
un ensemble d'électrode (300) stocké à l'intérieur du boîtier (100) ; et
une plaque capuchon (200) couplée à l'ouverture dans le boîtier (100), et ayant des bornes d'électrode (210) d'une électrode positive (330) et d'une électrode négative (310), dans laquelle :
une bande de gonflement (500) est fixée à une surface de l'ensemble d'électrode (300), dans laquelle la bande de gonflement (500) s'allonge ou se dilate au contact avec un électrolyte (400) dans le boîtier (100), et
une première partie cordon concave (600) est formée sur au moins deux surfaces se faisant face le long d'un périmètre avant, arrière, de gauche et de droite du boîtier (100), **caractérisé en ce que** la première partie cordon (600) comprime une surface de la bande de gonflement (500) fixée à l'ensemble d'électrode (300) stocké à l'intérieur du boîtier (100).

2. Batterie rechargeable prismatique (10) selon la revendication 1, dans laquelle la bande de gonflement (500) s'étire dans une direction longitudinale ou se dilate en volume au contact avec l'électrolyte (400).

3. Batterie rechargeable prismatique (10) selon la revendication 1, dans laquelle la bande de gonflement (500) est fixée à des surfaces avant, arrière, de gauche et de droite de l'ensemble d'électrode (300).

4. Batterie rechargeable prismatique (10) selon la revendication 3, dans laquelle la bande de gonflement (500) est fixée en continu le long d'un périmètre comprenant les surfaces avant, arrière, de gauche et de droite de l'ensemble d'électrode (300).

5. Batterie rechargeable prismatique (10) selon la revendication 3, dans laquelle la bande de gonflement (500) est fixée le long du périmètre des surfaces avant, arrière, de gauche et de droite de l'ensemble d'électrode (300), et forme une première partie vide (510) le long d'une totalité de coin entre les surfaces avant, arrière, de gauche et de droite de l'ensemble d'électrode (300).

6. Batterie rechargeable prismatique (10) selon la revendication 5, dans laquelle la bande de gonflement (500) forme une deuxième partie vide (520) dans une partie médiane des surfaces avant et arrière de l'ensemble d'électrode (300).

7. Batterie rechargeable prismatique (10) selon la revendication 6, dans laquelle la bande de gonflement (500) fixée aux surfaces avant et arrière de l'ensemble d'électrode (300) par la deuxième partie vide (520) est sectionnée des deux côtés.

8. Batterie rechargeable prismatique (10) selon la revendication 6, dans laquelle la bande de gonflement (500) forme une troisième partie vide (530) dans une partie centrale des surfaces de gauche et de droite de l'ensemble d'électrode (300).

9. Batterie rechargeable prismatique (10) selon la revendication 1, dans laquelle la première partie cordon (600) est formée dans une position écartée d'une languette d'électrode (310, 312, 314) de l'ensemble d'électrode (300) stocké à l'intérieur du boîtier (100), et est formée adjacente à la plaque capuchon (200) pour comprimer une partie supérieure de l'ensemble d'électrode (300) stockée à l'intérieur du boîtier (100).

10. Batterie rechargeable prismatique (10) selon la revendication 1, dans laquelle la première partie cordon (600) est formée en continu sur les quatre surfaces le long des périmètres avant, arrière, de gauche et de droite du boîtier (100).

11. Batterie rechargeable prismatique (10) selon la revendication 9, comprenant en outre une deuxième partie cordon (610) formée sur au moins deux surfaces se faisant face le long des périmètres avant, arrière, de gauche et de droite du boîtier (100) à une hauteur adjacente à une surface inférieure du boîtier (100).

12. Batterie rechargeable prismatique (10) selon la revendication 11, dans laquelle la deuxième partie cordon (610) soutient une partie inférieure de l'ensemble d'électrode (300) stocké à l'intérieur du boîtier (100).

13. Batterie rechargeable prismatique (10) selon la revendication 12, dans laquelle la deuxième partie cordon (610) soutient par contact une surface inférieure de l'ensemble d'électrode (300).
